(19) Europäisches Patentamt / European Patent Office / Office européen des brevets

(11) **EP 4 742 515 A1**

(12) **EUROPEAN PATENT APPLICATION**
published in accordance with Art. 153(4) EPC

(43) Date of publication:
**13.05.2026 Bulletin 2026/20**

(21) Application number: **24836074.5**

(22) Date of filing: **03.07.2024**

(51) International Patent Classification (IPC):
**H02K 19/36** (2006.01)    **H02K 19/10** (2006.01)

(52) Cooperative Patent Classification (CPC):
**H02K 19/10; H02K 19/36**

(86) International application number:
**PCT/JP2024/024096**

(87) International publication number:
**WO 2025/009561 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.07.2023  JP 2023111699**

(71) Applicant: **DENSO CORPORATION
Kariya-city, Aichi 448-8661 (JP)**

(72) Inventor: **YOSHIMURA, Masataka
Kariya-city, Aichi 448-8661 (JP)**

(74) Representative: **Kuhnen & Wacker
Patent- und Rechtsanwaltsbüro PartG mbB
Prinz-Ludwig-Straße 40A
85354 Freising (DE)**

(54) **FIELD-WINDING ROTATING ELECTRIC MACHINE**

(57)    A wound-field rotating electrical machine has a rotor (60) which includes a rotor core having main poles, one for each of magnetic poles arranged in a circumferential direction of the rotor. The main poles protrudes in a radial direction of the rotor. A field winding (70) is wound around the main poles. The rotor includes a circuit module (102) equipped with a capacitor (91) connected to the field winding. The capacitor is made of a multilayer capacitor in which layers of a dielectric (151) and electrodes (152) are stacked on one another. In the circuit module, a stacking direction, in which the layers of the dielectric and the electrodes are stacked, is oriented perpendicular to the radial direction of the rotor.

## FIG.15

EP 4 742 515 A1

**Description**

CROSS REFERENCE TO RELATED DOCUMENT

The present application claims the benefit of priority of Japanese Patent Application No. 2023-111699 filed on July 6, 2023, the disclosure of which is incorporated in its entirety herein by reference.

Technical Field

This disclosure relates generally to a wound-field rotating electrical machine.

BACKGROUND ART

Conventional wound-field rotating electrical machines are equipped with a rotor which includes a rotor core having a plurality of main poles (i.e., magnetic salient poles) provided one for each magnetic pole arranged in the circumferential direction. The rotor also includes a field winding wound around the main poles. A structure is also known in which a circuit module as an electrical device is secured to an axial end of the rotor (see First Patent Literature). The circuit module includes capacitors. A resonance circuit is made of a combination of the field winding and the capacitors.

PRIOR ART DOCUMENT

PATENT DOCUMENT

FIRST PATENT LITERATURE : Japanese patent first publication No. 2020-124100

SUMMARY OF THE INVENTION

In the above-described wound-field rotating electrical machine in which the circuit module equipped with the capacitors mounted on the axial end of the rotor, the circuit module is rotated following rotation of the rotor. This leads to a risk that the capacitors may be undesirably deformed due to centrifugal force arising from the rotation of the circuit module. Specifically, when each capacitor is designed in a multilayer form in which a dielectric and electrodes are stacked in a radial direction of the rotor (which will also be referred to below as a stacking direction), centrifugal force acts on each capacitor in the stacking direction. Therefore, there is a concern that deformation may occur in the dielectric layer and the electrode layers, leading to defects such as cracks in the capacitors. A typical multilayer capacitor is considered to be composed of a stack of thin films, when centrifugal force acts in the stacking direction. Such structure leads to a risk that the thin films may be deformed or damaged.

The present disclosure has been made in view of the above circumstances. It is an object of this disclosure to provide a wound-field rotating electrical machine capable of suppressing occurrence of capacitor defects due to centrifugal force in a circuit module that rotates along with a rotor.

This disclosure is to provide a wound-field rotating electrical machine which comprising: (a) a stator which includes a stator winding; (b) a rotor which includes a rotor core and a field winding; (c) a circuit module. The rotor core has main poles which are provided one for each of magnetic poles arranged adjacent to each other in a circumferential direction of the rotor. The main poles protrude in a radial direction of the rotor. The field winding is wound on the main poles. The circuit module is rotatable along with the rotor and includes a capacitor connected to the field winding. A high-frequency current flows through the stator winding to induce a flow of field current in the field winding. The capacitor is made of a multilayer capacitor in which a dielectric and electrodes are stacked and which is oriented in the circuit module to have a stacking direction in which the dielectric and the electrodes are stacked. The stacking direction is oriented perpendicular to the radial direction of the rotor.

The structure of the wound-field rotating electrical machine in which the circuit module equipped with the multilayer capacitor is disposed to be rotatable along with the rotor has a risk that defects may occur in the capacitor due to centrifugal force in relation to the stacking direction. In order to alleviate such a risk, the wound-field rotating electrical machine is designed to have disposed therein the capacitor which is oriented to have the stacking direction perpendicular to the radial direction of the rotor. This minimizes bending of the capacitor due to centrifugal force acting inside the capacitor, thereby avoiding defects in the capacitor in the circuit module rotating along with the rotor.

BRIEF DESCRIPTION OF THE DRAWINGS

The above-described object and other objects, features, and advantages of the present disclosure will become more apparent from the following detailed description with reference to the accompanying drawings. The drawings are:

Fig. 1 is an overall configuration diagram of a control system of a rotating electrical machine;
Fig. 2 is a diagram showing an inverter and peripheral components thereof;
Fig. 3 is a cross-sectional view of a rotor and a stator;
Fig. 4 is a diagram showing an electric circuit with which a rotor is equipped;
Fig. 5 is a perspective view showing an overall configuration of a rotor;
Fig. 6 is an exploded perspective view of a rotor;
Fig. 7 is a longitudinal sectional view of a rotor;
Fig. 8 is a partially exploded perspective view which illustrates winding units installed in a main body of a rotor;
Fig. 9 is a partially cross-sectional view of a main body of a rotor;
Fig. 10 is a perspective view of a circuit module;
Fig. 11 is a perspective view of a component holder;
Fig. 12 is a perspective view which illustrates layout of capacitors and diodes;
Fig. 13 is a perspective view which illustrates busbars;
Fig. 14 is a perspective view which illustrates layout of capacitors, diodes, and busbars;
Fig. 15 is a longitudinal sectional view which schematically illustrates layout of each capacitor installed in a circuit module;
Figs. 16(a) and 16(b) are longitudinal sectional views which illustrate modified forms of each capacitor resin-molded;
Fig. 17 is a longitudinal sectional view which schematically illustrates a modified structure of each capacitor installed in a circuit module;
Fig. 18 is a plan view which illustrates layout of capacitors and busbars arranged in a circumferential direction;
Fig. 19 is a longitudinal sectional view which illustrates a modified structure of each capacitor resin-molded;
Fig. 20 is a plan view which illustrates a modified layout of capacitors arranged in a circumferential direction;
Fig. 21 is a plan view which illustrates a modified layout of capacitors arranged in a circumferential direction, and
Figs. 22(a) and 22(b) are front views which illustrate modified layouts of capacitors arranged in a circumferential direction.

## MODE FOR CARRYING OUT THE INVENTION

An embodiment implementing a rotary electric machine according to the present disclosure will be described below with reference to the drawings. The rotary electric machine is used, for example, as a power source in electric vehicles or hybrid vehicles.

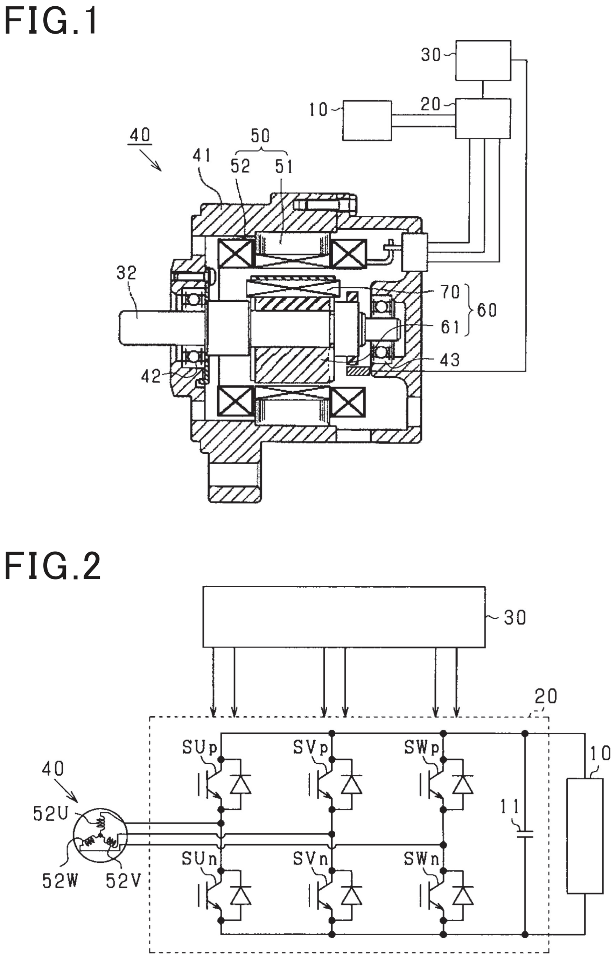

First, a control system including an electrical rotating electrical machine will be described with reference to Fig. 1. The control system includes the DC power supply 10, the inverter 20, the controller 30, and the rotating electrical machine 40. The rotating electrical machine 40 is a synchronous machine of the wound field type. For example, the rotating electrical machine 40, the inverter 20, and the controller 30 may be configured as an integrated electromechanical driver, or the rotating electrical machine 40, the inverter 20, and the controller 30 may each be configured as discrete components.

The rotating electrical machine 40 includes the housing 41, the stator 50 and the rotor 60 disposed within the housing 41. In the present embodiment, the rotating electrical machine 40 is an inner rotor type rotating electrical machine in which the rotor 60 is disposed radially inside the stator 50.

The stator 50 includes the stator core 51 and the stator winding 52. The stator winding 52 is composed, for example, of copper wires, and includes the U-phase winding 52U, the V-phase winding 52V, and the W-phase winding 52W, which are arranged with an electrical angle displacement of 120° from each other.

The rotor 60 includes the rotor core 61 and the field winding 70. The field winding 70 may be composed, for example, of aluminum wires having a low specific gravity and being easily moldable. The field winding 70 is not limited to aluminum wires, and may alternatively be made of, for example, copper wires or CNT (carbon nanotubes). The rotary shaft 32 is assembled into a central bore of the rotor core 61. The rotary shaft 32 is rotatably supported by the housing 41 through the bearings 42 and 43.

The inverter 20, as illustrated in Fig. 2, includes a series connection of the upper-arm switches SUp, SVp, SWp of the U, V, and W phases and the lower-arm switches SUn, SVn, SWn of the U, V, and W phases. In each phase, a connection point between each of the upper-arm switches SUp, SVp, SWp and a corresponding one of the lower-arm switches SUn, SVn, SWn is connected to first ends of the U-phase winding 52U, the V-phase winding 52V, and the W-phase winding 52W. Second ends of the U-phase winding 52U, the V-phase winding 52V, and the W-phase winding 52W are connected together at a neutral point. In other words, the stator winding 52 is star-connected. However, the stator winding 52 may alternatively be delta-connected. In the present embodiment, each of the switches SUp to SWn is made of an IGBT. A freewheeling diode is connected in anti-parallel to each of the switches SUp to SWn.

The DC power supply 10 has a positive terminal connected to collectors of the U-phase, V-phase, and W-phase upper-arm switches the SUp, the SVp, and the SWp. The DC power supply 10 also has a negative terminal connected to emitters of the U-phase, V-phase, and W-phase lower-arm switches the SUn, the SVn, and the SWn. The DC power supply 10 has the smoothing capacitor the 11 connected in parallel therewith.

The U-phase, V-phase, and W-phase upper-arm switches SUp, SVp, and SWp have collectors connected to the positive terminal of the DC power supply 10. The U-phase, V-phase, and W-phase lower-arm switches SUn, SVn, and SWn have emitters connected to the negative terminal of the DC power supply 10. The DC power supply 10 has the smoothing capacitor 11 connected in parallel thereto.

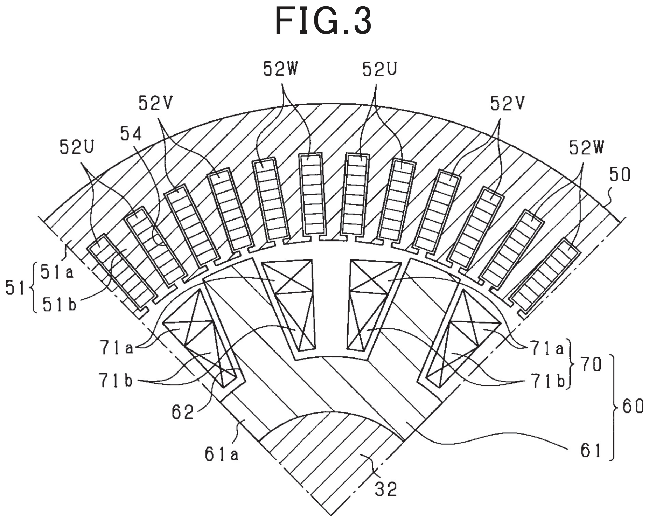

Next, the stator 50 and the rotor 60 will be described below with reference to Fig. 3.

The stator 50 and the rotor 60 are each arranged coaxially with the rotation shaft 32. In the following discussion, a direction in which the rotation shaft 32 extends will be referred to below as an axial direction, a direction extending radially from the center of the rotation shaft 32 will be referred to below as a radial direction, and a direction extending circumferentially about the rotation shaft 32 will be referred to below as a circumferential direction.

The stator core 51 is constituted by a stack of steel sheets made of a soft magnetic material, and includes the annular back yoke 51a and a plurality of teeth 51b protruding radially inward from the back yoke 51a. A plurality of slots 54 are disposed adjacent to each other in the circumferential direction and located between adjacent ones of the teeth 51b. The U-phase, V-phase, and W-phase windings 52U, 52V, and 52W are disposed in the slots 54 in a predetermined order, thereby completing the stator winding 52. For example, it is preferable to design the stator 50 to have a segment coil structure using a plurality of conductor segments, but however, the structure of the stator winding 52 is not limited thereto.

The rotor core 61 is made of a soft magnetic material and constituted, for example, by a stack of steel sheets. The rotor core 61 includes the cylindrical portion 61a and a plurality of the main poles 62 protruding radially outward from the cylindrical portion 61a. The field winding 70 extends around the main poles 62 in the form of a concentrated winding. In the present embodiment, the main poles 62 are provided in eight in number, provided at equal intervals in the circumferential direction.

The field winding 70 includes the first winding 71a and the second winding 71b. The first winding 71a is wound around a radially outer portion of each of the main poles 62, while and the second winding 71b is wound around a radially inner portion of each of the main poles 62, in other words, located radially inside the first winding 71a. On each of the main poles 62, winding directions of the first winding 71a and the second winding 71b are the same as each other. The first winding 71a extends or is wound in a first direction around a first main pole 62 that is one of a respective circumferentially adjacent two of the main poles 62, while the second winding 71b is wound in a second direction around a second main pole 62 that is the other of the adjacent two of the main poles 62. The first direction is opposite to the second direction. This winding orientation causes the circumferentially adjacent main poles 62, i.e., the first and second main poles 62 to be magnetized in opposite directions to each other. In the rotor 60, a plurality of magnetic poles (i.e., field poles) arranged in the circumferential direction are created by each of the main poles 62 of the rotor core 61 and the field winding 70 wound around a corresponding one of the main poles 62.

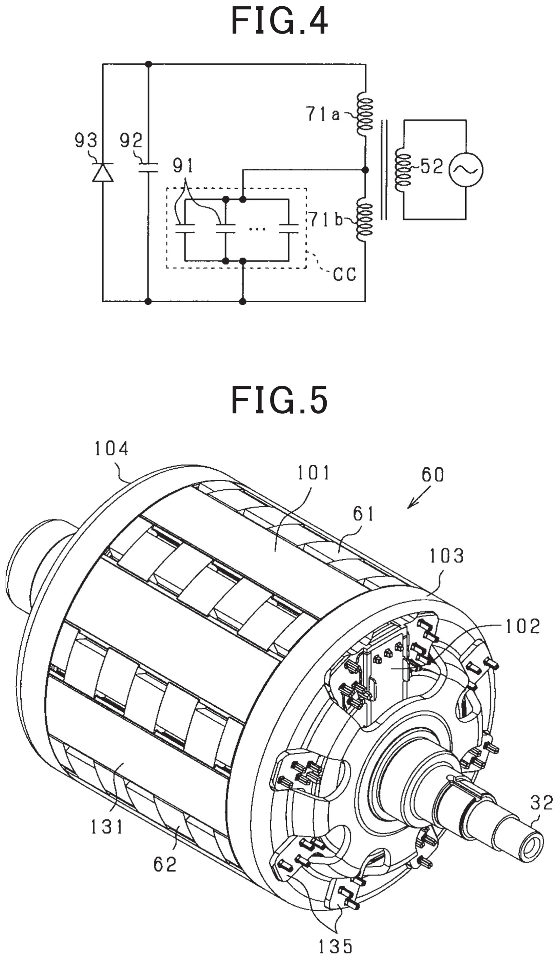

Fig. 4 illustrates an electric circuit provided for the rotor 60 which includes the winding portions 71a, 71b wound around the main poles 62. The first winding 71a and the second winding 71b are connected in series. The capacitor unit CC constituted by a plurality of the first capacitors 91 is connected in parallel to the second winding 71b. In the present embodiment, the capacitor unit CC is constituted, for example, by an assembly of the eleven first capacitors 91 connected in parallel to each other. Further, the second capacitor 92 is connected in parallel to a series-connected assembly of the first winding 71a and the second winding 71b. The second capacitor 92 is provided for noise suppression. In the present embodiment, the single second capacitors 92 is provided. The first capacitor 91 and the second capacitor 92 are made of multilayer ceramic capacitors and are configured to have the same structure as each other.

The diode 93 serving as a rectifier is connected between ends of the series-connected assembly of the first and second windings 71a and 71b. Specifically, the first winding 71a has a first end connected to a cathode of the diode 93, while the second winding 71b has a first end connected to a second end of the first winding 71a. The diode 93 has an anode connected to a second end of the second winding 71b.

In the present embodiment, a series resonance circuit is constituted by the first winding 71a, the first capacitor 91, and the diode 93, and a parallel resonance circuit is constituted by the second winding 71b and the first capacitor 91. When a first resonance frequency, which is a resonance frequency of the series resonance circuit, is denoted as $f1$, and a second resonance frequency, which is a resonance frequency of the parallel resonance circuit, is denoted as $f2$, the first and second resonance frequencies $f1$ and $f2$ are expressed by the following equations (1) and (2).

$$f1 = 1 / (2\pi\sqrt{(L1 \times C)}) \qquad \ldots \qquad (1)$$

$$f2 = 1 / (2\pi\sqrt{(L2 \times C)}) \qquad \ldots \qquad (2)$$

where L1 represents an inductance of the first winding 71a, L2 represents an inductance of the second winding 71b, and C represents a capacitance of the first capacitor 91.

When a high-frequency excitation current flows through the stator winding 52, it causes a fluctuation arising from a high-frequency component of a main magnetic flux to occur in a magnetic circuit including the stator core 51 and the rotor core 61. The fluctuation of the main magnetic flux results in induced voltages being generated respectively in the first ands second windings 71a and 71b, so that currents are induced in the first and second windings 71a and 71b. In this case, when induced voltages of the same polarity are generated respectively in the first and second windings 71a and 71b, the induced currents of the winding portions 71a and 71b are not canceled, thus resulting in increases in the induced currents. The diode 93 works to rectify the currents flowing through the first and second windings 71a and 71b in one direction. This causes a field current to flow in the field winding 70 in a direction given by the diode 93, thereby exciting the field winding 70.

Referring back to Fig. 2, the controller 30 is mainly constituted by a microcomputer (which will also be simply referred to below as a computer). The microcomputer includes a CPU. The controller 30 generates drive signals for turning on and off the switches SUp to SWn installed in the inverter 20. Specifically, the controller 30 generates drive signals and outputs them to the gates of the switches SUp to SWn to turn on or off the switches Sup to Swn for converting DC power output from the DC power supply 10 into AC power which is, in turn, delivered to the U-phase, V-phase, and W-phase windings 52U, 52V, and 52W.

The controller 30 works to turn on or off the switches SUp to SWn to create a flow of a composite current, as resulting from a fundamental wave current and a high-frequency excitation current, in each of the phase windings 52U, 52V, and 52W. The fundamental wave current is a current mainly for generating torque in the rotating electrical machine 40. The high-frequency excitation current is a high-frequency current having a frequency higher than that of the fundamental wave current and mainly used for exciting the field winding 70. It is also possible to use a harmonic current as the high-frequency current. Phase currents flowing through the phase windings 52U, 52V, and 52W are shifted from each other by 120° in electrical angle.

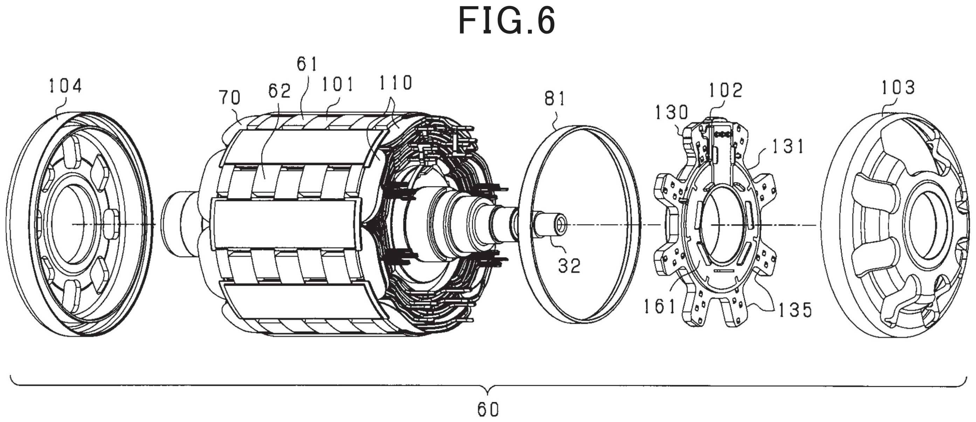

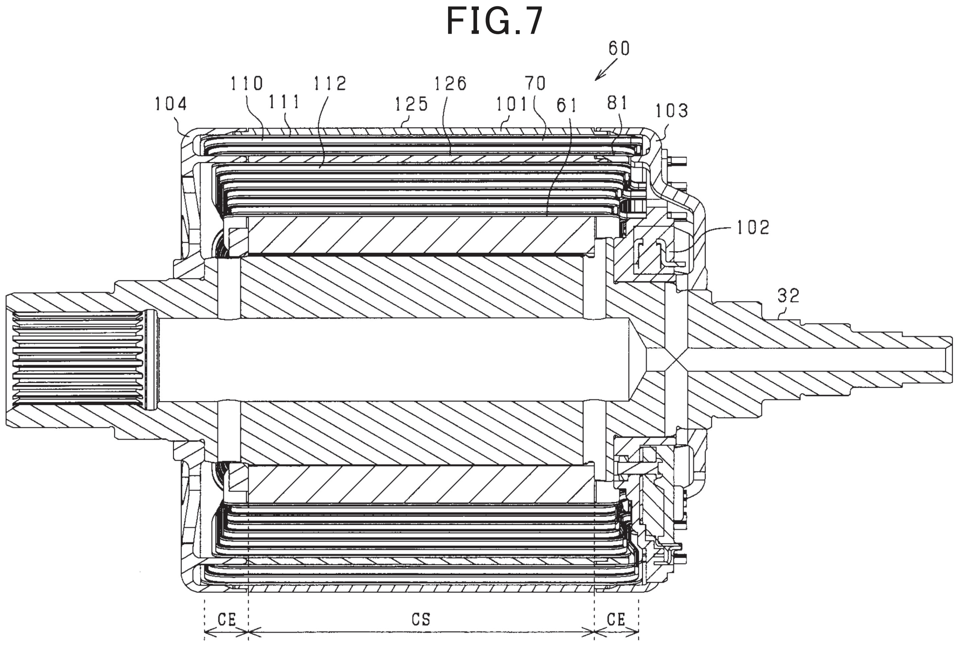

Next, a configuration of the rotor 60 will be described in more detail. Fig. 5 is a perspective view illustrating the entire configuration of the rotor 60. Fig. 6 is an exploded perspective view of the rotor 60. Fig. 7 is a longitudinal sectional view of the rotor 60.

The rotor 60 generally includes the rotor main body 101, the circuit module 102 arranged on one of axially opposed ends of the rotor main body 101, and coil end covers 103 and 104 as annular members attached to the axially opposed ends of the rotor main body 101. The rotor main body 101 includes, as described with reference to Fig. 3, the rotor core 61 and the field winding 70. The rotation shaft 32 is assembled into a central hole of the rotor core 61. The field winding 70 is made of a plurality of winding units 110 arranged in the circumferential direction. The circuit module 102 is fixed to the rotation shaft 32 with the rotation shaft 32 inserted through a hollow portion of the circuit module 102. The field winding 70 (i.e., the winding units 110), as shown in Fig. 7, has a portion which faces the rotor core 61 in the radial direction in the form of the coil side portion CS, and also has portions which are located axially outside the rotor core 61 in the form of the coil end portions CE. The circuit module 102 is located to face one of the coil end portions CE of the field winding 70 in the axial direction of the rotor 60.

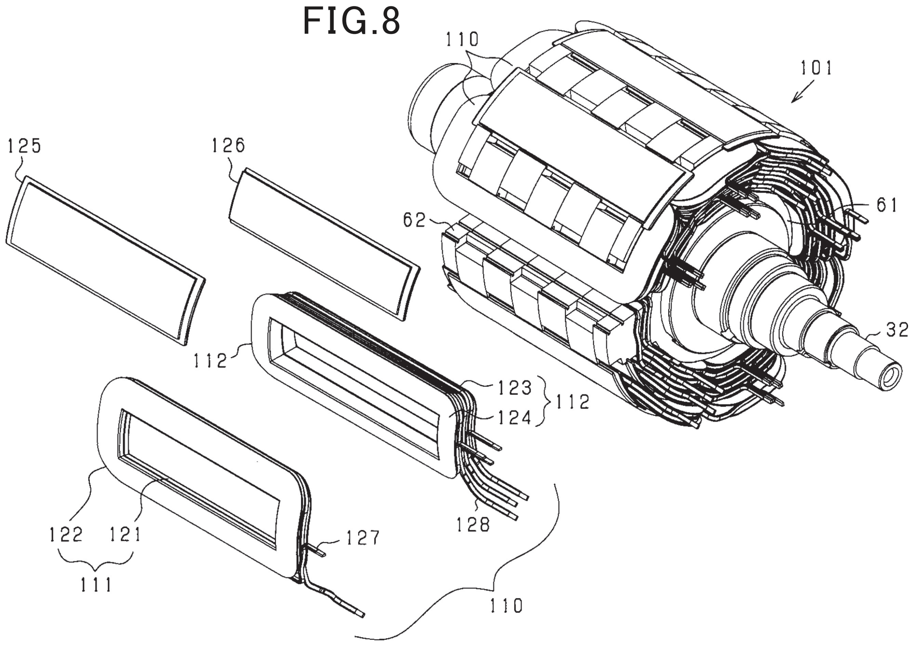

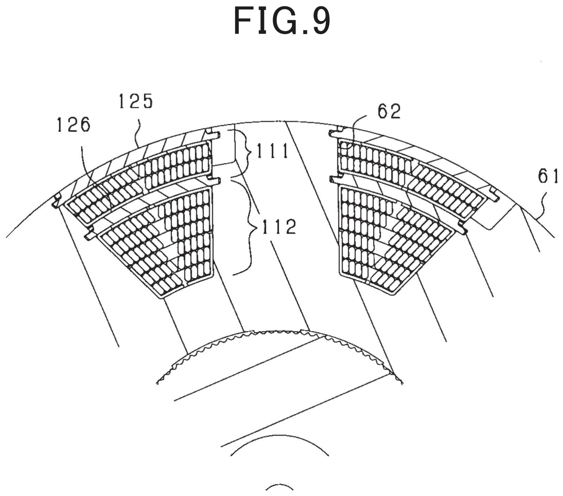

Fig. 8 is a perspective view illustrating the rotor main body 101 with one of the winding units 110 shown in an exploded view for better visibility. Fig. 9 is a cross-sectional view illustrating a structure of a part of the rotor main body 101. The rotor main body 101 includes the winding units 110, one for each magnetic pole of the rotor 60. Each of the winding units 110 has a length extending in the axial direction and is of an annular shape defining an inner space (also called a hollow portion) in which the main poles 62 of the rotor core 61 are disposed. The winding units 110 are assembled to the rotor core 61.

Each of the winding units 110 includes the first coil module 111 and the second coil module 112. When attached to the main poles 62, the first coil module 111 is located radially outside the second coil module 111. The second coil module 112 is located radially inside the first coil module 111. The first coil module 111 works as the first winding 71a. The second coil module 112 works as the second winding 71b.

The first coil module 111 includes the annular coil body 121 and the thin plate-shaped insulator 122. The annular coil body 121 is formed by winding a rectangular wire conductor in a circumferential direction and a radial direction thereof so as to form multiple layers. The thin plate-shaped insulator 122 is provided integrally with the coil body 121. The insulator 122 has a first portion which extends in the circumferential direction and covers radially outer and inner peripheries of the coil body 121 and a second portion which extends in the radial direction to cover the hollow portion of the coil body 121. In other words, the radially outer and inner peripheries of the coil body 121 and the hollow portion of the coil body 121 are coated by the insulator 122.

The second coil module 112 includes the annular coil body 123 and the insulator 124. The annular coil body 123 is made of a conductor that is a flat wire wound in multiple layers in a circumferential direction and a radial direction thereof. The insulator 124 is formed integrally with the annular coil body 123 in a thin plate shape. The insulator 124 has a first portion which extends in the circumferential direction and covers radially outer and inner peripheries of the coil body 123 and a second portion which extends in the radial direction to cover the hollow portion of the coil body 123. In other words, the radially outer and inner peripheries of the coil body 123 and the hollow portion of the coil body 123 are coated by the insulator 124.

The coil bodies 121 and 123 are implemented by air-core coils configured, for example, as $\alpha$-wound coils. The flat wire used for the coil bodies 121 and 123 has a substantially rectangular cross-sectional shape (specifically, a substantially oblong shape). The flat wire consists of a conductor portion made of aluminum and an insulating layer covering the conductor portion. However, it is also possible to use a round wire having a circular cross-sectional shape as the conductor material.

As can seen in Fig. 9, the first coil module 111 has the conductor wound in two layers stacked on one another in the radial direction, whereas the second coil module 112 has the conductor wound in six layers stacked on one another in the radial direction. The coil modules 111 and 112 are different in number of turns stacked on one another in the circumferential direction (i.e., the number of conductor arrangements in the circumferential direction) from each other. In other words, the number of turns which are located on a radially outer side of the rotor core 61 is greater than that located on a radially inner side of the rotor core 61. This enhances the space factor of the field winding 70. It should be noted that the coil bodies 121 and 123 arranged adjacent to each other in the radial direction may be designed to have the same number of turns stacked on one another in the circumferential direction if the space factor is disregarded.

In the rotor main body 101, the first coil module 111 and the second coil module 112 of each of the winding units 110 are fit on a corresponding one of the main poles 62. The retaining plates 125 and 126 are secured to the rotor main body 101 to keep the assembly of the first coil module 111 and the second coil module 112. Specifically, the retaining plate 125 is attached to the radially outer end of the first coil module 111, while the retaining plate 126 is interposed between the first coil module 111 and the second coil module 112.

The rotor 60, as shown in Fig. 6, has the coil end ring 81 assembled to the axial ends of the winding units 110. Specifically, the coil end ring 81 is, as clearly illustrated in Fig. 7, held between coil ends of the first coil module 111 and the second coil module 112 which face each other in the radial direction and between the retaining plate 126 and the coil end cover 103 which face each other in the axial direction.

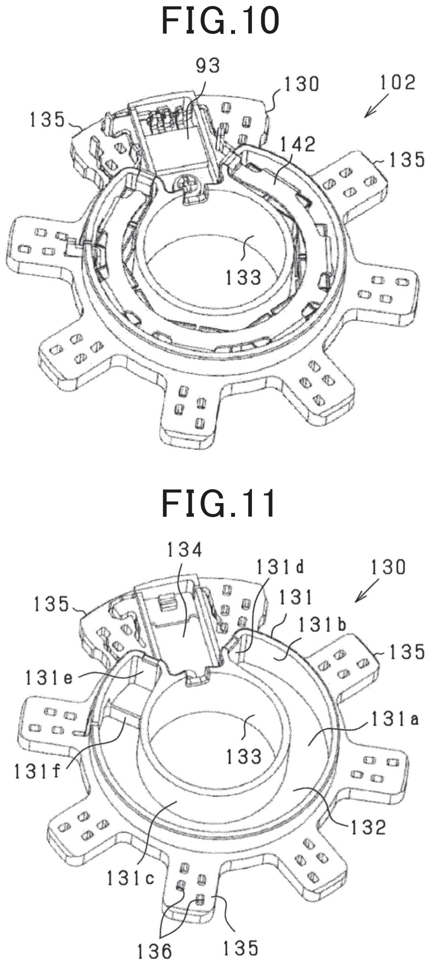

Subsequently, the circuit module 102 will be described below with reference to Figs. 10 to 14.

The circuit module 102 includes the first capacitor 91, the second capacitor 92, the diode 93, the component holder 130, the first busbar 141, the second busbar 142, and the third busbar 143. The component holder 130 is made of material having electrical insulation properties, such as a synthetic resin.

The component holder 130, as illustrated in Fig. 11, includes the main body 131 having an annular shape. The main body 131 includes the bottom plate 131a having a C-shape, the outer peripheral wall 131b extending in the axial direction from a radial outer end of the bottom plate 131a, and the inner peripheral wall 131c extending in the axial direction from a radial inner end of the bottom plate 131a. The main body 131 also includes the first side wall 131d extending in the axial direction from one circumferential end of the bottom plate 131a, and the second side wall 131e extending in the axial direction from the other circumferential end of the bottom plate portion 131a. The height dimension (i.e., axial dimension) of each of the wall 131b to 131e is greater than height dimensions of the first capacitor 91 and the second capacitor 92.

The main body 131 has the housing 132 in which a C-shaped inner chamber or space is defined by the bottom plate 131a and the walls 131b to 131e. The housing 132 has the first capacitors 91 and the second capacitor 92 installed therein. The housing 132 has arranged therein the partition 131f which extends in the axial direction from the bottom plate 131a. The partition 131f divides the inner chamber of the housing 132 into a first housing chamber for the first capacitors 91 and a second housing chamber for the second capacitor 92.

The main body 131 has formed therein the central hole 133 through which the rotary shaft 32 is inserted. Specifically, the central hole 133 is defined by an inner surface of the inner peripheral wall 131c.

The component holder 130 includes the device mount 134 on which the diode 93 is mounted. The device mount 134 extends radially outward from a portion of the inner peripheral wall 131c which does not radially faces the outer peripheral wall 131b. The device mount 134 also extends radially outward from an intermediate portion of the inner peripheral wall 131c in the axial direction. The diode 93 is fixed to the device mount 134 using a fastener such as a bolt.

The component holder 130 includes a plurality of winding-fixing portions 135 protruding radially outward from the main body 131. In the present embodiment, the winding fixing portions 135 are provided in the same number as the main poles 62, and specifically, eight winding fixing portions 135 are arranged at equal intervals away from each other in the circumferential direction. Each of the winding fixing portions 135 extends radially outward from an intermediate portion of the outer peripheral wall 131b in the axial direction.

Each of the winding fixing portions 135 has formed therein a plurality of insertion holes 136 extending in the axial direction. In each of the winding units 110 of the rotor main body 101, as shown in Fig. 8, the two conductor ends 127 are drawn out from the axial end of the first coil module 111, while the six conductor ends 128 are drawn out from the axial end of the second coil module 112. In the first coil module 111, since the first winding 71a is constituted by one air-core coil, the two conductor ends 127 are drawn out. In the second coil module 112, since the second winding 71b is constituted by three air-core coils arranged in the radial direction, the six conductor ends 128 are drawn out.

The first coil modules 111 which are arranged adjacent to each other in the circumferential direction are connected in series with each other by inserting the conductor ends 127 of a respective two of the first coil modules 111 located adjacent to each other in the circumferential direction into the insertion holes 136 and then joining the conductor ends 127 using, for example, welding techniques. Similarly, the second coil modules 112 which are arranged adjacent to each other in the circumferential direction are connected in series with each other by inserting the conductor ends 128 of a respective two of the second coil modules 112 located adjacent to each other in the circumferential direction into the insertion holes 136 and then joining the conductor ends 128 using, for example, welding techniques.

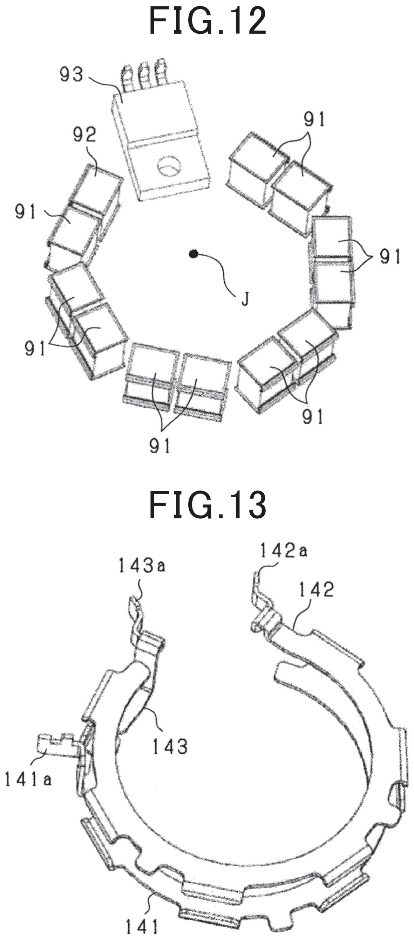

The eleven first capacitors 91 and the one second capacitor 92 are, as clearly illustrated in Figs. 12 to 14, annularly arranged on an imaginary circle centered on the axis J of the rotor 60. Each of the capacitors 91 and 92 has a rectangular parallelepiped shape or a cubic shape.

The first capacitors 91 have first terminals electrically connected to the first busbar 141 having an arc shape (specifically, a C-shape). The first capacitors 91 and the second capacitor 92 have second terminals electrically connected to the second busbar 142 having an arc shape (specifically, a C-shape). The second capacitor 92 has a first terminal electrically connected to the third busbar 143 having an arc shape. The third busbar 143 is discrete from the first busbar 141 and is disposed apart from the first busbar 141. When the rotor 60 is viewed in the axial direction, the busbars 141 to 143 are arranged annularly around the axis J.

The busbars 141 to 143 are plate-shaped wiring members, and oriented to have plate surfaces facing in the axial direction. In the present embodiment, the first busbar 141 and the third busbar 143 are arranged adjacent to each other in the circumferential direction. The second busbar 142 is oriented to have the first and third bus bars 141 and 143. The first capacitors 91 are disposed between the first busbar 141 and the second busbar 142. The second capacitor 92 is disposed between the third busbar 143 and the second busbar 142.

The first busbar 141 has the first connection terminal 141a that is electrically connected to the second end of the first winding 71a and the first end of the second winding 71b. The second busbar 142 has the second connection terminal 142a that is electrically connected to the second end of the second winding 71b and the anode of the diode 93. The third busbar 143 has the third connection terminal 143a that is electrically connected to the first end of the first winding 71a and the cathode of the diode 93.

The rotation of the rotor 60 results in rotation of the circuit module 102 along with the rotor 60. This motion leads to a risk that the capacitors 91 and 92 which are made of multilayer ceramic capacitors (also called multilayer capacitors) may malfunction due to centrifugal force in relation to a direction in which the multilayers are stacked on one another (which will also be referred to below as a stacking direction). Specifically, in the circuit module 102, if the stacking direction of the capacitors 91 and 92 is in the radial direction, deformation may occur in dielectric layers and electrode layers of the capacitors 91 and 92, raising concerns that defects such as cracks may occur. Therefore, in the present embodiment, by setting the stacking direction of the capacitors 91 and 92 to a specific orientation, the deformation of the capacitors 91 and 92 due to centrifugal force during rotor rotation are suppressed.

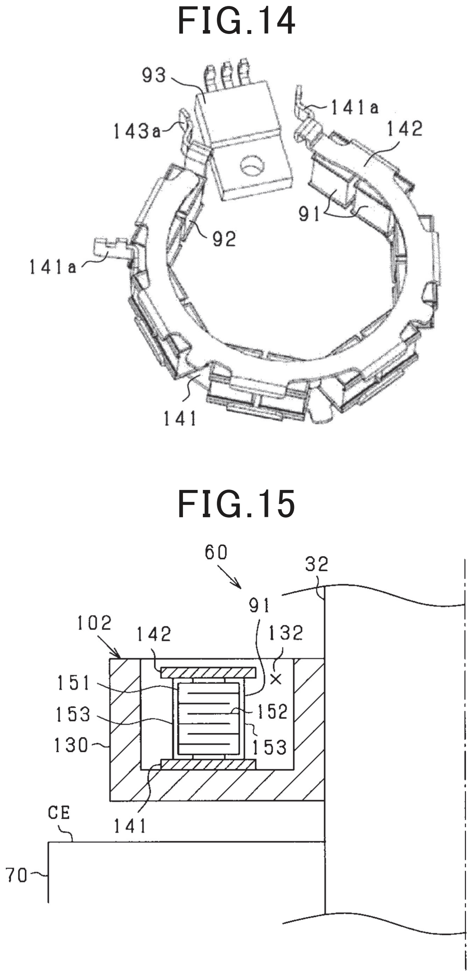

Fig. 15 is a diagram schematically illustrating an arrangement of the first capacitor 91 in the circuit module 102. In Fig. 15, a vertical direction represents the axial direction described above, and a lower side of the drawing represents the field winding 70. Further, in Fig. 15, a lateral direction indicates the radial direction described above.

In the component holder 130 of the circuit module 102, the first busbar 141 and the second busbar 142 are disposed to face each other in the axial direction within the housing 132 formed in the main body 131. The first capacitor 91 is arranged between the busbars 141 and 142. The first capacitor 91 includes the dielectric 151, the plurality of internal electrodes 152 which are embedded in the dielectric 151 to form multiple layers of the dielectric 151 and arranged at a predetermined interval away from each other, and the pair of external electrodes 153 electrically connected to the internal electrodes 152. The internal electrodes 152 are each of a thin-film shape and are arranged in parallel to each other.

The first capacitor 91 has a multilayer structure in which the layers of the dielectric 151 and the internal electrodes 152 are alternately stacked, and the external electrodes 153 located on both sides of the dielectric 151 are respectively connected alternately to the internal electrodes 152 arranged in the stacking direction. Specifically, in the first capacitor 91, one of ends of each of the internal electrodes 152 is exposed on either one of radially opposing surfaces of the dielectric 151. The external electrodes 153 are connected to the exposed ends of the internal electrodes 152. Further, one of the two external electrodes 153 is electrically connected to the first busbar 141, while the other external electrode 153 is electrically connected to the second busbar 142. The two external electrodes 153 serve as the first terminal and the second terminal of the first capacitor 91. The first capacitor 91 is a multilayer ceramic chip capacitor.

The first capacitor 91 is arranged to have the pair of external electrodes 153 oriented such that one of the external electrodes 153 is located radially outside the other. Although illustration of the specific configuration of the first capacitor 91 is omitted in Fig. 15, it is preferable that a left one of the external electrode 153, as viewed in the drawing, be electrically connected to the first busbar 141 and insulated from the second busbar 142 using an electrical insulating layer arranged between the external electrode 153 and the second busbar 142. It is also preferable that a right one of the external electrode 153, as viewed in the drawing, is electrically connected to the second busbar 142 and insulated from the first busbar 141 using an electrical insulating layer disposed between the external electrode 153 and the first busbar 141.

In the circuit module 102, the first capacitor 91 is arranged to have a direction (i.e., the stacking direction) in which the layers of the dielectric 151 and the internal electrodes 152 are stacked on one another and which is oriented orthogonally to the radial direction of the rotor 60, that is, oriented in the vertical direction (i.e., the axial direction) in Fig. 15. In the first capacitor 91, each of the internal electrodes 152, which overlap with one another in the stacking direction, is oriented to extend in the radial direction. This layout minimizes a risk that the centrifugal force may act on the first capacitor 91 during rotation of the rotor 60, which results in inconveniences such as bending of the dielectric 151 or the internal electrodes 152.

It is preferable that the first capacitor 91 and each of the busbars 141 and 142 are joined using a conductive adhesive, thereby establishing both an electrical and mechanical connection of the first capacitor 91 and each of the busbars 141 and 142. Such joining serves to enhance the effect of suppressing the movement (i.e., positional displacement) of the first capacitor 91 due to the centrifugal force as compared with use of solder as a general joining means.

Alternatively, the external electrodes 153 of the first capacitor 91 and the busbars 141 and 142 may be mutually welded together. This results in an increase in joining strength of the first capacitor 91.

Although a detailed description of the second capacitor 92 is omitted, the second capacitor 92 has the same configuration as the first capacitors 91 and is installed in the circuit module 102 such that the stacking direction in which the dielectric 151 and the internal electrodes 152 of the second capacitor 92 are stacked is oriented orthogonally to the radial direction of the rotor 60.

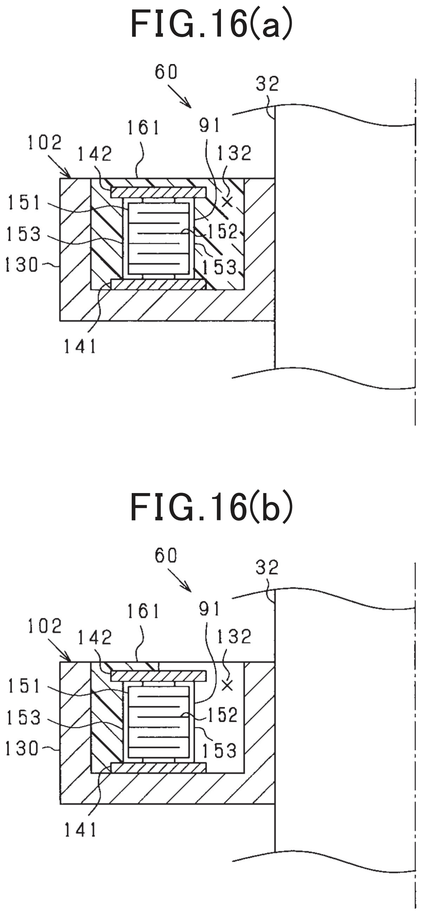

In the circuit module 102, the capacitors 91 and 92 may be molded with resin material. Specifically, as shown in Fig. 16(a), the resin material is filled into the housing 132 of the component holder 130 to form the resin mold portion 161. The resin material is, for example, a thermosetting resin such as epoxy resin. In this case, the capacitors 91 and 92 and the busbars 141 to 143 are embedded within the resin mold portion 161 in the housing 132 of the component holder 130. In Fig. 16(a), the resin mold portion 161 covers the entirety of the capacitors 91 and 92 in the housing 132.

The resin mold portion 161 may be, as illustrated in Fig. 16(b), disposed only radially outside the capacitors 91 and 92. In other words, a region in the housing 132, which is located radially inside the capacitors 91 and 92, may be unoccupied by a resin mold. When the entirety of the capacitors 91 and 92 is resin-molded, it will cause a large thermal stress to be exerted on the capacitors 91 and 92 due to a difference in coefficient of linear expansion between the capacitors 91 and 92 and the resin material, which may result in defects of the capacitors 91 and 92. In order to alleviate this drawback, the structure in Fig. 16(b) is, as described above, designed to have no resin mold arranged radially inside the capacitors 91 and 92.

In the structure illustrated in Fig. 6(a) or 16(b), the resin mold is disposed in a region of the housing 132 which is located at least radially outside or inside the capacitors 91 and 92, thereby minimizing the risk of defects in the capacitors 91 and 92.

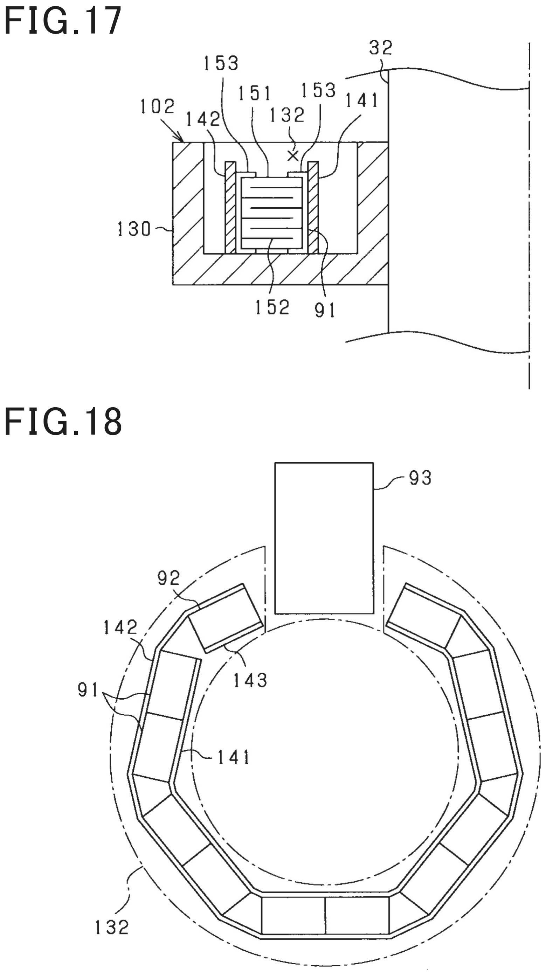

The configuration of the circuit module 102 may be modified as shown in Fig. 17. In this arrangement, the positions of the first busbar 141 and the second busbar 142 within the housing 132 differ from those in Fig. 17. The busbars 141 and 142 are disposed facing each other in the radial direction. Specifically, their plate surfaces extend in the axial direction, with the first busbar 141 located on the radially inner side and the second busbar 142 on the radially outer side, and the first capacitor 91 mounted between them.

Each of the first capacitors 91, like in Fig. 15, has the two external electrodes 153 which are located away from each other in the radial direction of the rotor 60. The stacking direction of the first capacitor 91 is oriented in a direction orthogonal to the radial direction of the rotor 60, as in Fig. 15. Although not shown, it is preferable that the second capacitor 92 also have the same configuration as the first capacitors 91.

Fig. 18 is a plan view showing the layout of the capacitors 91 and 92, which have the configuration illustrated in Fig. 17, and the busbars 141 to 143 disposed within the housing 132 of the component holder 130. In Fig. 18, the second busbar 142 is arranged annularly so as to surround all of the capacitors 91 and 92 from the radially outer side. In addition, the first busbar 141 is disposed radially inside the first capacitors 91 so that the first capacitors 91 are located therebetween the first busbar 141 and the second busbar 142. The third busbar 143 is disposed radially inside the second capacitor 92 so that the second capacitor 92 is disposed between the second bus bar 142 and the third bus bar 143. The configurations of Figs. 17 and 18, as described above, have the second busbar 142 disposed in contact with the radially outer peripheral surfaces of the capacitors 91 and 92, thereby enabling the second bus bar 142 to absorb the centrifugal force applied to the capacitors 91 and 92.

The second busbar 142 surrounds an array of the capacitors 91 and 92, which are arranged in the circumferential direction, from radially outside it. The second busbar 142 has a length of at least a semicircular shape. This causes centrifugal force, which is generated by rotation of the rotor 60 in the capacitors 91 and 92 arranged in the circumferential direction, to be exerted by the capacitors 91 and 92 on the second bus bar 142 in radially opposite directions. Such force exertion in the radially opposite directions minimizes undesirable deformation of the second busbar 142 in the radial direction, which avoids misalignment of the capacitors 91 and 92.

The first busbar 141 and the third busbar 143 may alternatively be arranged radially outside the capacitors 91 and 92, while the second busbar 142 may be arranged radially inside the capacitors 91 and 92.

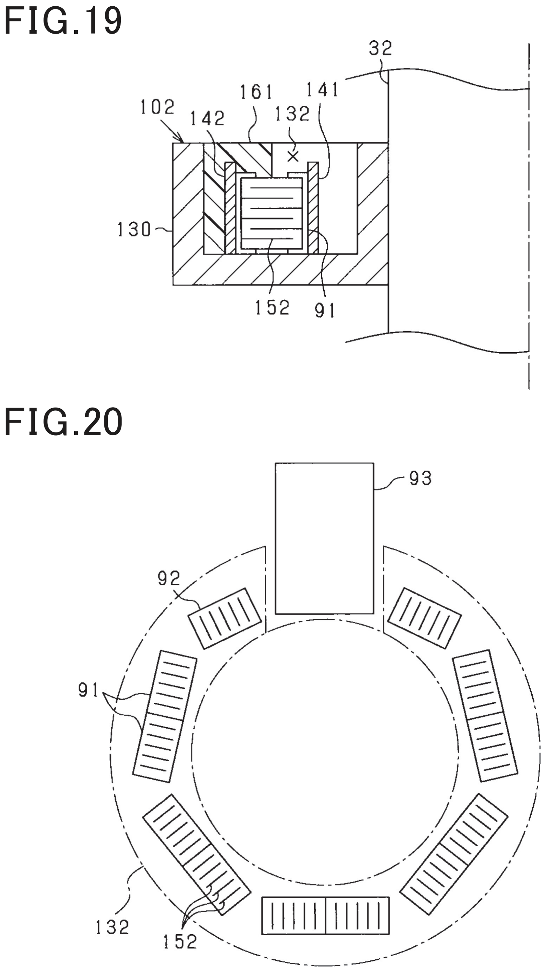

Fig. 19 is a diagram showing a configuration in which the first capacitor 91 is molded with a resin material in the circuit module 102 shown in Fig. 17. In Fig. 19, the resin mold portion 161 is disposed within the housing 132 of the component holder 130 and located only on the radially outer side of the housing 132. The resin mold portion 161 may be arranged in the housing 132 of the component holder 130 so as to cover the entirety of the first capacitor 91 and the busbars 141 and 142.

The above-described embodiment offers the following beneficial advantages.

In the circuit module 102, each of the capacitors 91 and 92 are arranged such that the stacking direction of the dielectric 151 and the internal electrodes 152 is oriented orthogonally to the radial direction of the rotor 60. This minimizes a risk of bending of the capacitors 91 and 92 due to centrifugal force acting inside the capacitors 91 and 92, thereby avoiding defects in the capacitors 91 and 92 arising from the centrifugal force generated by the rotation of the circuit module 102 along with the rotor 60.

As described above, the capacitors 91 and 92 are resin-molded in a region radially outside them within the housing 132. This enhances the suppression of defects in the capacitors 91 and 92 caused by the centrifugal force.

When the capacitors 91 and 92 are entirely resin-molded, thermal stress on the capacitors 91 and 92 increases due to the difference in coefficient of linear expansion between each of the capacitors 91 and 92 and the resin material of the mold, which potentially leads to defects in the capacitors 91 and 92. Therefore, as described above, the capacitors 91 and 92 are designed so that the inner peripheries of the capacitors 91 and 92 are not resin-molded, thereby improving resistance of the capacitors 91 and 92 against both centrifugal force and thermal stress.

In the circuit module 102, one of the busbars 141 to 143 is arranged in contact with radially outer peripheral surfaces of the capacitors 91 and 92. The one of the busbars 141 to 143, therefore, works to absorb centrifugal force applied to the capacitors 91 and 92, thereby improving the resistance of the capacitors 91 and 92 to the centrifugal force.

In the circuit module 102, for example, the second busbar 142 is configured to surround the capacitors 91 and 92 arranged in the circumferential direction from the radially outer side thereof, and to have a length corresponding to at least semicircle. This minimizes a risk that a force biased in the radial direction may act the second busbar 142 during rotation of the rotor 60, causing misalignment of the second busbar 142.

## OTHER EMBODIMENTS

The structures in the above embodiments may be modified in the following ways.

In the rotating electrical machine 40, when the circuit module 102 is located to axially face one of the coil end portions CE of the field winding 70, it leads to a concern that the capacitors 91 and 92 may be affected by thermal energy or heat from the field winding 70, thereby resulting in non-uniformity of temperature in the capacitors 91 and 92. In a typical multilayer capacitor, there is a concern that non-uniformity of temperature in the capacitor may occur due to a variation in heat transfer inside the capacitor depending on the stacking direction. For example, when the dielectric 151 and the internal electrodes 152 of the capacitors 91 and 92 are stacked in the axial direction, a temperature difference, i.e., non-uniformity tends to occur inside the capacitors 91 and 92 in the axial direction, and relatively large expansion occurs in portions of the capacitors 91 and 92 closer to the field winding 70. This may leads to a risk that higher-temperature end portions of the capacitors 91 and 92 may be deformed by the thermal expansion, resulting in defects, such as cracks, in the capacitors 91 and 92.

In view of this, as shown in Fig. 20, the stacking direction of the capacitors 91 and 92 may be set orthogonal to the radial direction of the rotor 60 and aligned with the circumferential direction of the rotor 60. In this orientation, the dielectric 151 and the inner electrodes 152, which have different thermal conductivities, each extend in the axial direction. Therefore, unlike the case where the dielectric 151 and the internal electrodes 152 extend in a direction orthogonal to the axial direction (i.e., when the stacking direction is along the axial direction), uniform temperature distribution is achieved inside the capacitors 91 and 92 even when heat is transferred from the field winding 70 to the capacitors 91 and 92. This minimizes undesirable deformation of the capacitors 91 and 92 due to non-uniform thermal expansion. The structure in Fig. 20 is, therefore, capable of suppressing both defects occurring in the capacitors 91 and 92 due to centrifugal force and defects occurring in the capacitors 91 and 92 due to heat transmitted from the field winding 70.

In Fig. 20, the first capacitors 91 are aligned with each other in the circumferential direction in pairs, each pair consisting of two of the capacitors 91 arranged adjacent to each other in the circumferential direction. Each pair of the capacitors 91 has a circumferentially intermediate portion whose radially inner side surface extends in a direction perpendicular to the radial direction of the circuit module 102.

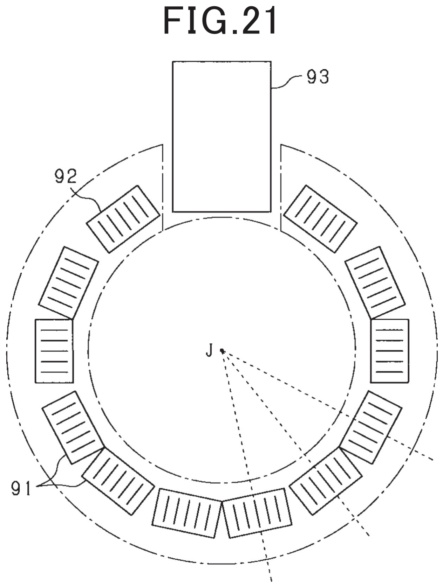

The capacitors 91 and 92 may be arranged in the circumferential direction in the layout illustrated in Fig. 21. Each of the capacitors 91 and 92 has a circumferential intermediate portion whose radially inner side surface extends in a direction perpendicular to the radial direction of the circuit module 102.

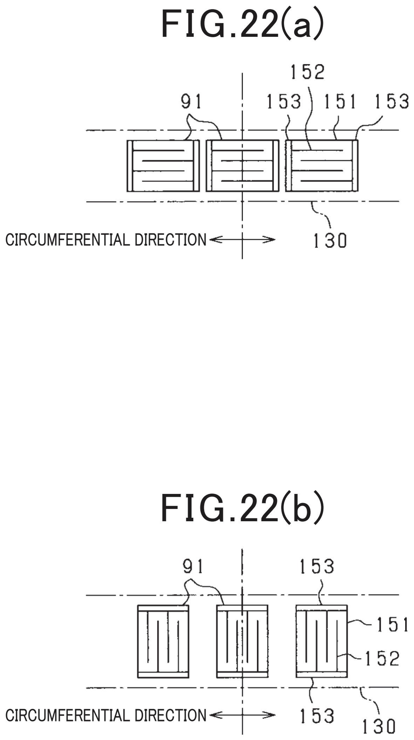

In the component holder 130, the capacitors 91 and 92 may be arranged in an orientation shown in Fig. 22(a) or 22(b), where the vertical direction corresponds to the axial direction, and the horizontal direction corresponds to the circumferential direction. In Fig. 22(a), the first capacitors 91 are arranged such that the stacking direction of the dielectric 151 and the internal electrodes 152 is oriented in the axial direction (i.e., a direction orthogonal to the radial direction of the rotor 60). The pair of external electrodes 153 of each first capacitor 91 extends in the radial direction. The paired external electrodes 153 are disposed on circumferentially opposed surfaces of each first capacitor 91. In other words, in each first capacitor 91, one of the external electrodes 153 is located on one of circumferentially opposed side surfaces of the substantially rectangular parallelepiped dielectric 151, while the other external electrode 153 is located on the opposite side surface of the dielectric 151.

The structure in Fig. 22(b) is different from Fig. 22(a) in that the stacking direction of each of the first capacitors 91 is oriented in the circumferential direction, and the paired external electrodes 153 are disposed on the axially opposed surfaces of each of the first capacitors 91 and extend in the radial direction. The structure in Fig. 22(b) corresponds to that illustrated in Fig. 20 above. The structure in Fig. 22(a) or 22(b) serves to minimize undesirable deformation (such as bending) of the external electrodes 153 of the capacitors 91 and 92 caused by centrifugal force during rotation of the rotor 60.

The first capacitors 91 that constitute the resonance circuit may be connected in parallel to the first winding 71a instead of the second winding 71b. In addition, the anode of the diode 93 in the resonance circuit may be connected to the first winding 71a of the series-connected assembly of the first and second windings 71a and 71b, while the cathode of the diode 93 may be connected to the second winding 71b of the series-connected assembly.

In the rotor 60, the second winding 71b may be disposed on the radially outer side (i.e., close to the stator 50) relative to the first winding 71a.

The stator core 51 of the stator 50 may alternatively be designed to have no teeth.

The rotating electrical machine referred to above is mounted in the automotive vehicle as the main power source, but however, may alternatively be used as an *ISG* (Integrated Starter Generator) that functions both as an electrical motor-generator.

The mobile body on which the rotating electrical machine system is mounted is not limited to a vehicle, but may also be, for example, an aircraft or a ship. In addition, the rotating electrical machine system is not limited to a system mounted on a mobile body, but may also be a stationary system.

The above-described embodiments offer the following technical aspects.

*FIRST STRUCTURE*

A wound-field rotating electrical machine (40) comprises: (a) a stator (50) which includes a stator winding (52); (b) a rotor (60) which includes a rotor core (61) and a field winding (70), the rotor core having main poles (62) which are provided one for each of magnetic poles arranged adjacent to each other in a circumferential direction of the rotor, the main poles protruding in a radial direction of the rotor, the field winding being wound on the main poles; and (c) a circuit module (102) which is rotatable along with the rotor and includes a capacitor (91, 92) connected to the field winding. A high-frequency current flows through the stator winding to induce a flow of field current in the field winding. The capacitor is made of a multilayer capacitor in which a dielectric (151) and electrodes (152) are stacked and which is disposed in the circuit module to have a stacking direction in which the dielectric and the electrodes are stacked and which is oriented orthogonally to the radial direction of the rotor.

*SECOND STRUCTURE*

The wound-field rotating electrical machine as set forth in the above-described first structure, wherein the capacitor is molded with resin in a region radially outside an outer periphery thereof in the circuit module.

*THIRD STRUCTURE*

The wound-field rotating electrical machine as set forth in the above-described second structure, wherein the capacitor is not molded with the resin in a region radially inside an inner periphery thereof.

*FOURTH STRUCTURE*

The wound-field rotating electrical machine as set forth in any one of the above-described first to third structures, wherein the capacitor has a multilayer structure in which a plurality of internal electrodes (152) which serve as the electrodes are embedded in the dielectric to form a stack of the internal electrodes and layers of the dielectric. The dielectric has first and second opposed surfaces on which the internal electrodes are exposed and to which external electrodes (153) are attached. A stacking direction in which the layers of the dielectric and the internal electrodes are stacked on one another is oriented perpendicular to the radial direction of the rotor. The external electrodes include a first external electrode and a second external electrode which extend in the circumferential direction on both sides of the capacitor.

*FIFTH STRUCTURE*

The wound-field rotating electrical machine as set forth in any one of the above-described structures, wherein the circuit module is arranged to axially face a coil end of the field winding which is located axially outside the rotor core. The stacking direction of the capacitor is oriented perpendicular to the radial direction of the rotor and along the circumferential direction of the rotor.

*SIXTH STRUCTURE*

The wound-field rotating electrical machine as set forth in any one of the above-described structures, wherein the capacitor includes a plurality of capacitors. The capacitors are arranged in the circumferential direction in the circuit module and electrically connected to the field winding using a busbar (141 to 143). The busbar is arranged in contact with radially outer peripheral surfaces of the capacitors.

*SEVENTH STRUCTURE*

The wound-field rotating electrical machine as set forth in the above-described sixth structure, wherein the busbar surrounds the capacitors, which are arranged in the circumferential direction, from radially outside the capacitors, the busbar has a length corresponding to at least a semicircle in the axial direction.

This disclosure is not limited to the above embodiments, but may be realized by various embodiments without departing from the purpose of the disclosure. This disclosure includes all possible combinations of the features of the above embodiments or features similar to the parts of the above embodiments. The structures in this disclosure may include only one or some of the features discussed in the above embodiments unless otherwise inconsistent with the aspects of this disclosure.

**Claims**

1. A wound-field rotating electrical machine (40) comprising:

    a stator (50) which includes a stator winding (52);
    a rotor (60) which includes a rotor core (61) and a field winding (70), the rotor core having main poles (62) which are provided one for each of magnetic poles arranged adjacent to each other in a circumferential direction of the rotor, the main poles protruding in a radial direction of the rotor, the field winding being wound on the main poles; and
    a circuit module (102) which is rotatable along with the rotor and includes a capacitor (91, 92) connected to the field winding, wherein
    a high-frequency current flows through the stator winding to induce a flow of field current in the field winding, the capacitor is made of a multilayer capacitor in which a dielectric (151) and electrodes (152) are stacked and which is disposed in the circuit module to have a stacking direction in which the dielectric and the electrodes are stacked and which is oriented orthogonally to the radial direction of the rotor.

2. The wound-field rotating electrical machine as set forth in claim 1, wherein the capacitor is molded with resin in a region radially outside an outer periphery thereof in the circuit module.

3. The wound-field rotating electrical machine as set forth in claim 2, wherein the capacitor is not molded with the resin in a region radially inside an inner periphery thereof.

4. The wound-field rotating electrical machine as set forth in any one of claims 1 to 3, wherein the capacitor has a multilayer structure in which a plurality of internal electrodes (152) which serve as the electrodes are embedded in the dielectric to form a stack of the internal electrodes and layers of the dielectric,

    the dielectric has first and second opposed surfaces on which the internal electrodes are exposed and to which external electrodes (153) are attached, and
    a stacking direction in which the layers of the dielectric and the internal electrodes are stacked on one another is oriented perpendicular to the radial direction of the rotor, and the external electrodes are arranged to extend in the radial direction of the rotor.

5. The wound-field rotating electrical machine as set forth in any one of claims 1 to 3, wherein the circuit module is arranged to axially face a coil end of the field winding which is located axially outside the rotor core,
the stacking direction of the capacitor is oriented perpendicular to the radial direction of the rotor and along the circumferential direction of the rotor.

6. The wound-field rotating electrical machine as set forth in any one of claims 1 to 3, wherein the capacitor includes a plurality of capacitors,

   the capacitors are arranged in the circumferential direction in the circuit module and electrically connected to the field winding using a busbar (141 to 143),
   the busbar is arranged in contact with radially outer peripheral surfaces of the capacitors.

7. The wound-field rotating electrical machine as set forth in claim 6, wherein the busbar surrounds the capacitors, which are arranged in the circumferential direction, from radially outside the capacitors, and the busbar has at least a semicircular length extending in the axial direction.

# FIG.1

# FIG.2

# FIG.3

# FIG.4

# FIG.5

# FIG.6

EP 4 742 515 A1

FIG.7

FIG.8

# FIG.9

# FIG.10

# FIG.11

# FIG.12

# FIG.13

# FIG.14

# FIG.15

# FIG.16(a)

# FIG.16(b)

# FIG.17

# FIG.18

# FIG.19

# FIG.20

# FIG.21

# FIG.22(a)

CIRCUMFERENTIAL DIRECTION

# FIG.22(b)

CIRCUMFERENTIAL DIRECTION

## INTERNATIONAL SEARCH REPORT

| International application No. |
|---|
| **PCT/JP2024/024096** |

| A. | CLASSIFICATION OF SUBJECT MATTER |
|---|---|

*H02K 19/36*(2006.01)i; *H02K 19/10*(2006.01)i
FI:  H02K19/36 Z; H02K19/10 Z

According to International Patent Classification (IPC) or to both national classification and IPC

| B. | FIELDS SEARCHED |
|---|---|

Minimum documentation searched (classification system followed by classification symbols)

H02K19/36; H02K19/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-124100 A (DENSO CORPORATION) 13 August 2020 (2020-08-13) paragraphs [0001]-[0080], fig. 1-19 | 1-2, 4, 6-7 |
| A | | 3,5 |
| Y | US 2005/0206269 A1 (SINTERTECHNIK GMBH) 22 September 2005 (2005-09-22) paragraphs [0011]-[0013], [0048], fig. 5 | 1-2, 4, 6-7 |
| Y | CD-ROM of the specification and drawings annexed to the request of Japanese Utility Model Application No. 68269/1992 (Laid-open No. 31371/1994) (SHIBAURA ENGINEERING WORKS CO., LTD.) 22 April 1994 (1994-04-22), paragraphs [0019]-[0020], fig. 4 | 2 |
| A | JP 2020-191743 A (DENSO CORPORATION) 26 November 2020 (2020-11-26) paragraphs [0001]-[0092], fig. 1-23 | 1-7 |
| A | WO 2022/196285 A1 (DENSO CORPORATION) 22 September 2022 (2022-09-22) paragraphs [0001]-[0065], fig. 1-12 | 1-7 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/024096**

| Patent document cited in search report | | | Publication date (day/month/year) | Patent family member(s) | | | Publication date (day/month/year) |
|---|---|---|---|---|---|---|---|
| JP | 2020-124100 | A | 13 August 2020 | US 2020/0251940 A1 paragraphs [0001]-[0126], fig. 1-19 | | | |
| US | 2005/0206269 | A1 | 22 September 2005 | (Family: none) | | | |
| JP | 6-31371 | U1 | 22 April 1994 | (Family: none) | | | |
| JP | 2020-191743 | A | 26 November 2020 | US 2020/0373823 A1 paragraphs [0001]-[0131], fig. 1-23B CN 111987832 A | | | |
| WO | 2022/196285 | A1 | 22 September 2022 | US 2024/0006967 A1 paragraphs [0001]-[0080], fig. 1-12 CN 116998097 A | | | |

Form PCT/ISA/210 (patent family annex) (July 2022)

**REFERENCES CITED IN THE DESCRIPTION**

**Patent documents cited in the description**

- JP 2023111699 A
- JP 2020124100 A